# EUROPEAN PATENT SPECIFICATION

(11) **EP 3 971 790 B1**
(45) Date of publication and mention of the grant of the patent: **04.03.2026**
(21) Application number: 19928369.8
(22) Date of filing: 06.12.2019
(51) Int. Cl.: G06N 3/096, G06V 10/82, G06N 3/045, G06F 18/00

(54) **METHOD FOR IMPROVING REPRODUCTION PERFORMANCE OF TRAINED DEEP NEURAL NETWORK MODEL AND DEVICE USING SAME**
VERFAHREN ZUR VERBESSERUNG DER WIEDERGABELEISTUNG EINES TRAINIERTEN TIEFEN NEURONALEN NETZMODELLS UND VORRICHTUNG DAMIT
PROCÉDÉ D'AMÉLIORATION DES PERFORMANCES DE REPRODUCTION D'UN MODÈLE DE RÉSEAU NEURONAL PROFOND ENTRAÎNÉ ET DISPOSITIF L'UTILISANT

(30) Priority: 14.05.2019 KR 20190056141
(43) Date of publication of application: 23.03.2022
(73) Proprietor: Vuno, Inc., Seoul 06536 (KR)
(72) Inventor: BAE, Woong, Seoul 06624 (KR); BAE, Byeong-uk, Incheon 21521 (KR); CHUNG, Minki, Seoul 06538 (KR); PARK, Beomhee, Seoul 05045 (KR)
(74) Representative: Schmitt-Nilson Schraud Waibel Wohlfrom Patentanwälte Partnerschaft mbB
(86) International application number: PCT/KR2019/017199
(87) International publication number: WO 2020/230972

(56) References cited:
- WO-A1-2019/025909
- JP-B2- 6 066 086
- KR-A- 20180 120 240
- US-A1- 2018 373 999
- TASDIZEN TOLGA ET AL: "Improving the robustness of convolutional networks to appearance variability in biomedical images", 2018 IEEE 15TH INTERNATIONAL SYMPOSIUM ON BIOMEDICAL IMAGING (ISBI 2018), IEEE, 4 April 2018 (2018-04-04), pages 549 - 553, XP033348261, DOI: 10.1109/ISBI.2018.8363636
- CAO, BIN ET AL.: "Distance Metric Learning under Covariate Shift", PROCEEDINGS OF THE TWENTY-SECOND INTERNATIONAL JOINT CONFERENCE ON ARTIFICIAL INTELLIGENCE, 1 January 2011 (2011-01-01), pages 1204 - 1210, XP055760926
- S. C. NAYAK , B. B. MISRA , H. S. BEHERA: "Impact of Data Normalization on Stock Index Forecasting", INTERNATIONAL JOURNAL OF COMPUTER INFORMATION SYSTEMS AND INDUSTRIAL MANAGEMENT APPLICATIONS, vol. 6, 2014, pages 257 - 269, XP055760932, ISSN: 2150-7988
- WENYUAN DAI, XUE GUI-RONG, YANG QIANG, YU YONG: "Transferring Naive Bayes Classifiers for Text Classification", PROCEEDINGS OF THE TWENTY-SECOND AAAI CONFERENCE ON ARTIFICIAL INTELLIGENCE, 1 January 2007 (2007-01-01), pages 540 - 545, XP055760936

## Description

### TECHNICAL FIELD

The present disclosure relates to a method of improving reproduction performance of a deep neural network model trained using a group of learning data so that the deep neural network model exhibits excellent reproduction performance even with respect to target data having a different qualitative pattern from the group and to an apparatus using the same. According to the method according to the present disclosure, a computing apparatus acquires the target data, withdraws (or retrieves) at least one piece of candidate data having the highest similarity to the target data from a learning data representative group including reference data selected from among the learning data, performs adaptive pattern transformation on the target data so that the target data is adapted for the candidate data, and supports transfer of transformation data, which is a result of the adaptive pattern transformation, to the deep neural network model, thereby acquiring an output value from the deep neural network model.

### BACKGROUND ART

As most medical images (an X-ray image, a CT image, an MRI image, a fundus image, a pathology image, etc.) have various qualitative patterns {representing aspects that differently appear according to a manufacturer, a difference in imaging preference of medical professionals, a racial difference, state of a subject (e.g., whether the subject is obese or not or whether the subject has undergone an operation or not), a capture environment, etc.}, the same pretrained deep neural network models exhibit a considerable difference in performance, and this may be instability that should be solved.

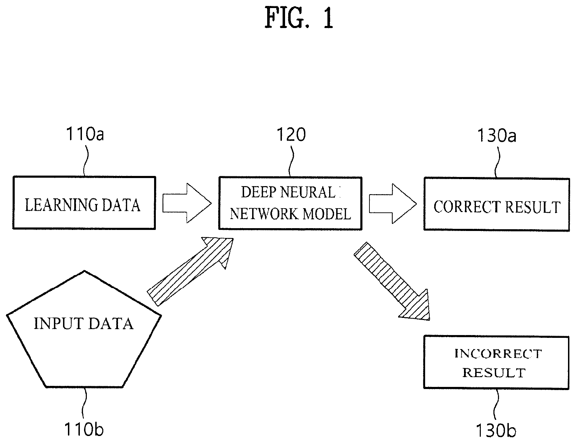

Referring to an example of FIG. 1, when a deep neural network model 120 is trained to produce a correct result 130a with respect to training data 110a using training data 110a, if the deep neural network model 120 produces an incorrect result 130b with respect to input data 110b having a different qualitative pattern from the train data, this shows the case of such instability. Even when the input data 110b has a different characteristic distribution from the training data 110a, this may correspond to the case in which the input data 110b has a different qualitative pattern from the learning data 110a.

Specifically, it may be impossible to implement deep neural network models for all qualitative patterns of very diverse medical images, which causes a decrease in classification performance of a deep neural network model, which is trained for a group of training data having one qualitative pattern, with respect to data having different qualitative patterns. It is very inefficient and expensive to match data for each institution and each country having a different qualitative pattern one by one. In fact, since it is not possible to know qualitative patterns of all images, there is always uncertainty about data quality.
US 2018/373999 Al describes a method for training a deep neural network (DNN) to perform a specified task with respect to images having a target image style, comprising: obtaining the DNN to be trained; obtaining an original training dataset, which includes a plurality of original training images and a training label for each original training image, the original training images having image styles different from the target image style; obtaining an image having the target image style; using the image having the target image style as a style target image, training a style transformer network to perform a style transformation that transforms any photorealistic input image into a transformed image that has contents of the input image, maintains photorealistic quality of the input image, and has an image style that matches the image style of the style target image; using the trained style transformer network to transform each of the original training images into a corresponding transformed training image; labeling each transformed training image with the training label of the corresponding original training image to form an augmented training dataset; and using the augmented training dataset to train the DNN to perform the specified task.
WO 2019/025909 A1 describes a computer-implemented method comprising: providing to a processor, a plurality of digital images, each digital image including an object to be recognized, and a texture or style feature reflecting real-world conditions under which the image of the object was taken; clustering, via the processor, the plurality of digital images into different groups according to the texture or style features of the images, each group including one or more of the digital images having similar texture or style features; selecting, via the processor, one or more representative style images from each group of images; training, via the processor, a style-transfer neural network for at least one of the representative style images to obtain one or more trained style-transfer neural networks; transferring, via the trained style-transfer neural networks, the texture or style features from each representative image to a target image to generate styled images; and training an image-recognition machine learning model using the styled images.
In the publication by Tasdizen Tolga et al., "Improving the robustness of convolutional networks to appearance variability in biomedical images", 2018 IEEE 15th International Symposium On Biomedical Imaging (ISBI 2018), IEEE, 4 April 2018, pages 549-553, XP033348261, DOI: 10.1109/ ISBI.2018.8363636, the neighborhood similarity layer (NSL) is described. NSL can be used in a convolutional neural network (CNN) to improve robustness to changes in the appearance of objects that are not well represented by the training data.

In order to overcome this limitation, the present disclosure is intended to propose a technical method capable of improving reproduction performance even for data of different patterns by removing a performance difference between various patterns of medical images of a deep neural network model.

### DETAILED DESCRIPTION OF THE DISCLOSURE

### Technical Problems

An object of the present disclosure is to provide a method for enabling a deep neural network model to produce stable performance with respect to input data of various qualitative patterns, and an apparatus using the same.

In particular, an object of the present disclosure is to provide a method capable of removing inconvenient customized work with respect to individual data having different qualitative patterns according to institutions, thereby increasing work efficiency using a deep neural network model.

Methods and apparatuses of the present disclosure are specified in the claims.

### Technical Solutions

A characteristic configuration of the present disclosure for achieving the above objects of the present disclosure and realizing characteristic effects of the present disclosure to be described later is described below.

The invention is defined by the appended set of claims.

### Advantageous Effects

According to the method and apparatus of the present disclosure, reproduction performance of a deep neural network model that generates an output value with respect to input data of various qualitative patterns may be improved.

### Description of Drawings

The accompanying drawings for use in the description of embodiments of the present disclosure are only a part of the embodiments of the present disclosure, and other related drawings may be obtained based on these drawings without inventive effort by persons of ordinary skill in the art to which the present disclosure pertains (hereinafter referred to as "those skilled in the art").
FIG. 1 is a diagram conceptually illustrating problems of a related art in which performance of a deep neural network model is degraded with respect to input data having a different qualitative pattern from learning data used to train the deep neural network model.

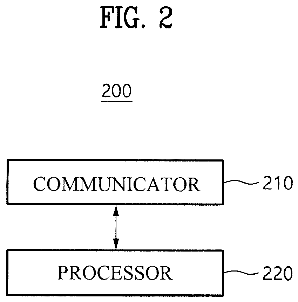

FIG. 2 is a conceptual diagram schematically illustrating an exemplary configuration of a computing apparatus for performing a method of improving reproduction performance of an output value for target data having different qualitative patterns of a pretrained deep neural network model (hereinafter referred to as a "deep neural network model reproduction performance improvement method") according to an embodiment of the present disclosure.

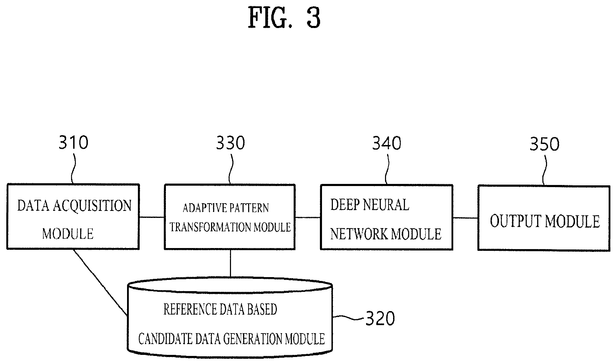

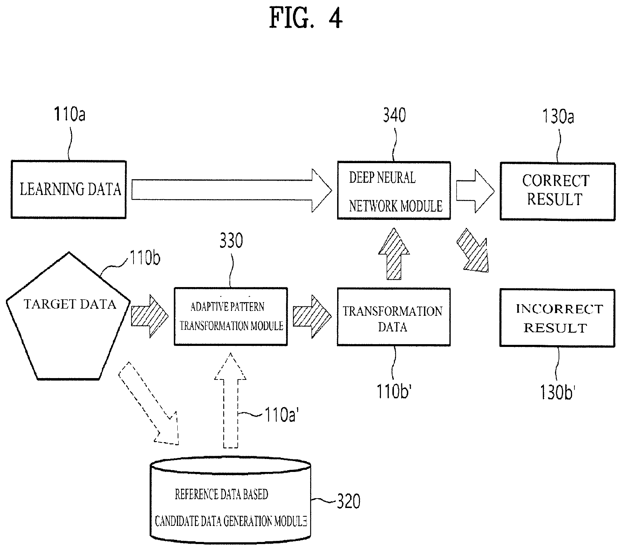

FIG. 3 is a block diagram exemplarily illustrating hardware or software elements of a computing apparatus for performing the deep neural network model reproduction performance improvement method of the present disclosure. FIG. 4 is a diagram schematically illustrating a process of inputting and processing data and outputting a processed result according to the deep neural network model reproduction performance improvement method of the present disclosure.

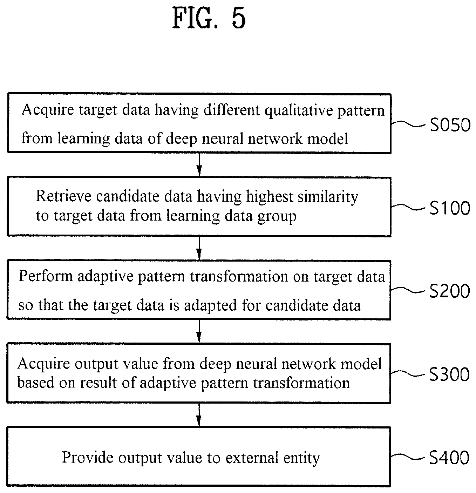

FIG. 5 is a flowchart exemplarily illustrating the deep neural network model reproduction performance improvement method of the present disclosure.

### BEST MODE FOR CARRYING OUT THE DISCLOSURE

The following detailed description of the present disclosure is described with reference to the accompanying drawings in which specific embodiments of the present disclosure are illustrated as examples, to fully describe purposes, technical solutions, and advantages of the present disclosure. The embodiments are described in sufficient detail for those skilled in the art to carry out the present disclosure.

The term "image" or "image data" used throughout the detailed description and claims of the present disclosure refers to multi-dimensional data composed of discrete image elements (e.g., pixels in two-dimensional (2D) images). In other words, the term "image" or the "image data" refers to a target visible with an eye (e.g., displayed on a video screen) or a digital representation of the target (e.g., a file corresponding to pixel output of computed tomography (CT), a magnetic resonance imaging (MRI) detector, and the like). For example, the "image" or "imaging" may refer to a medical image of a subject collected by CT, MRI, an ultrasound system, or other known medical imaging systems in the technical field of the present disclosure. The image may not necessarily need to be provided in terms of medical context and may be provided in terms of non-medical context, for example, X-rays for security screening.

Although imaging modalities used in various embodiments of the present disclosure include 2D or three-dimensional (3D) images such as CT, positron emission tomography (PET), PET-CT, single-photon emission computed tomography (SPECT), SPECT-CT, MR-PET, 3D ultrasound image, and the like, it will be appreciated by those skilled in the art that the imaging modalities are not limited to the exemplarily listed specific modalities.

In the drawings proposed for convenience of description in the present disclosure, although "learning data" and "target data" are exemplified as image data, the "learning data" and the "target data" are not necessarily limited to the image data. Likewise, it is apparent that "image data" exemplified as a medical image is not necessarily limited to medical image data.

The "DICOM" standard used throughout the detailed description and the claims is a generic term for various standards used for digital imaging and communications in medicine. The DICOM standard is published by the American college of radiology (ACR) and the national electrical manufacturers association (NEMA).

Further, the term "PACS", which stands for picture archiving and communication system, used throughout the detailed description and the claims of the present disclosure refers to a system that performs storage, processing, and transmission according to the DICOM standard. A medical image acquired using digital medical imaging equipment, such as X-ray, CT, and MRI, may be stored in a DICOM format and may be transmitted to a terminal inside or outside a hospital over a network. Here, interpretation results and medical records may be added to the medical image.

The term "training" or "learning" used throughout the detailed description and claims of the present disclosure refers to performing machine learning through procedural computing and is not intended to refer to a mental action such as educational activity of a human. For example, "deep learning" or "deep training" refers to machine learning using a deep artificial neural network.

Throughout the detailed description and claims of the present disclosure, the word "includes" or "comprises" and variations thereof are not intended to exclude other technical features, additions, components or operations. In addition, "one" or "an" is used to mean at least one, and "another" is defined as at least second or more.

For persons skilled in the art, other objects, advantages, and features of the present disclosure will be inferred in part from the description and in part from the practice of the present disclosure. The following examples and drawings are provided by way of illustration and are not intended to limit the present disclosure. Therefore, the detailed description disclosed herein should not be interpreted as limitative with respect to a specific structure or function and should be interpreted as representing basic data that provides guidelines such that those skilled in the art may variously implement the present disclosure as substantially suitable detailed structures.

Hereinafter, exemplary embodiments of the present disclosure will be described in detail with reference to the accompanying drawings so that the present disclosure may be easily understood and realized by those skilled in the art.

FIG. 2 is a conceptual diagram schematically illustrating an exemplary configuration of a computing apparatus for performing a deep neural network model reproduction performance improvement method according to an embodiment of the present disclosure.

A computing apparatus 200 according to an embodiment of the present disclosure may include a communicator 210 and a processor 220 and directly or indirectly communicate with an external computing apparatus (not shown) through the communicator 210.

Specifically, the computing apparatus 200 may achieve desired system performance using a combination of typical computer hardware (e.g., an apparatus including a computer processor, a memory, a storage, an input device, an output device, components of other existing computing apparatuses, etc.; an electronic communication apparatus such as a router, a switch, etc.; or an electronic information storage system such as a network-attached storage (NAS) and a storage area network (SAN)) and computer software (i.e., instructions that enable a computing apparatus to function in a specific manner).

The communicator 210 of the computing apparatus may transmit and receive a request and a response to and from another computing apparatus interacting therewith. As an example, the request and the response may be implemented using, without being limited to, the same transmission control protocol (TCP) session. For example, the request and the response may be transmitted and received as a user datagram protocol (UDP) datagram. In addition, in a broad sense, the communicator 210 may include a keyboard, a mouse, and other external input devices for receiving an instruction or a command, and a printer, a display, and other external output devices.

The processor 220 of the computing apparatus 100 may include a hardware configuration, such as a microprocessing unit (MPU), a central processing unit (CPU), a graphics processing unit (GPU), a tensor processing unit (TPU), a cache memory, a data bus, and the like. The processor 220 may further include a software configuration, such as an operating system, an application that performs a specific purpose, and the like.

FIG. 3 is a block diagram exemplarily illustrating hardware or software elements of a computing apparatus for performing the deep neural network model reproduction performance improvement method of the present disclosure. FIG. 4 is a diagram schematically illustrating a process of inputting and processing data and outputting a processed result according to the deep neural network model reproduction performance improvement method of the present disclosure.

A configuration of a method and an apparatus according to the present disclosure will now be briefly described. The computing apparatus 200 may include a data acquisition module 310 as an element thereof. The data acquisition module 310 is configured to acquire input data, i.e., target data 110b, to which the method according to the present disclosure is applied. It will be appreciated by those skilled in the art that individual modules illustrated in FIG. 3 may be implemented by, for example, the communicator 210 or the processor 220 included in the computing apparatus 200, or by interworking of the communicator 210 and the processor 220.

The target data 110b is image data obtained from a capture device linked through the communicator 210 or from an external image storage system such as a PACS. The target data 110b may be data acquired by the data acquisition module 310 of the computing device 200 after an image captured by the capture device is transmitted to the PACS according to the DICOM standard.

Next, the acquired target data 110b may be transferred to a reference data based candidate data generation module 320. This module 320 performs a function of retrieving at least one piece of candidate data 110a' having the highest similarity to the target data from a learning data representative group including reference data selected from among a group of learning data 110a used to train a deep neural network module 340. Selection of the learning data representative group and retrieval of similarity based data will be described in detail later.

An adaptive pattern transformation module 330 performs adaptive pattern transformation on the target data 110b using the candidate data 110a' similar to the target data 110b such that the target data 110b is adapted for the candidate data 110a'. Here, the adaptive pattern transformation refers to transformation of the target data 110b such that the target data 110b may have a qualitative pattern of the candidate data 110a'. An example of a configuration usable as a means of the adaptive pattern transformation will be described later.

Transformation data 110b', which is a result of the adaptive pattern transformation for the target data 110b, is transmitted to a deep neural network model of the deep neural network module 340, so that an output value is obtained from the deep neural network module 340.

An output module 350 may provide information including the output value (e.g., target data, candidate data, transformation data, the output value, reliability of the output value, etc.) to an external entity. This information may be provided together with visualization information of a portion corresponding to a major factor in calculating the output value. Here, the external entity includes a user or a manager of the computing apparatus 200 performing the method according to the present disclosure, a natural person who is a source of the target data (input data), a person in charge of managing the input data, etc., and it should be understood that any subject that requires information on an output value derived from the target data may be included in the external entity. When the external entity is a human, the output module 350 may provide information including the output value to the external entity through a predetermined output device, for example, a user interface displayed on a display.

Specific functions and effects of each component schematically described with reference to FIGS. 3 and 4 will be described later in detail with reference to FIG. 5. Although the elements illustrated in FIG. 3 are exemplified as being realized in one computing apparatus for convenience of description, it will be understood that the computing apparatus 200 performing the method of the present disclosure may be configured as a plurality of apparatuses interworked with each other.

FIG. 5 is a flowchart exemplarily illustrating the deep neural network model reproduction performance improvement method of the present disclosure.

Referring to FIG. 5, the deep neural network model reproduction performance improvement method includes step S100 in which the reference data based candidate data generation module 320 implemented by the computing apparatus 200 retrieves at least the one piece of candidate data 110a' having the highest similarity to the target data 110b from a learning data representative group including reference data selected from among the learning data 110a or supports another apparatus interworked through the communicator 210 of the computing apparatus 200 to retrieve the candidate data 110a', in a state in which the data acquisition module 310 implemented by, for example, the computing apparatus 200 acquires the target data 110b (S050). Here, retrieval of at least one piece of candidate data having the highest similarity is performed in a manner of retrieving a plurality of candidate data having similarity higher than a predetermined first threshold value.

Various means for performing similarity determination in step S100 are known to those skilled in the art. For example, similarity determination may be performed by, without being limited to, a deep learning based image withdrawing (or retrieving) scheme disclosed in Thesis 1: "Adnan Qayyum, Syed Muhammad Anwar, Muhammad Awais and Muhammad Majid. Medical image retrieval using deep convolutional neural network. Elsevier B.V. 2017; pp. 1-13.". It will be understood by those skilled in the art that the similarity determination is performed by a scheme disclosed in, for example, Thesis 2: "YuAn Chung et al. Learning Deep Representations of Medical Images using Siamese CNNs with Application to Content-Based Image Retrieval".

According to proposal of Thesis 1, latent features may be extracted from a trained deep neural network model using learning data and, if new target data is input, latent features of the target data may also be extracted from the trained deep neural network model. Thus, similarity between information of the latent features may be compared (e.g., by comparing distances such as an L2 distance). Since similarity increases as a distance is reduced, learning data which is the most similar to the target data may be acquired by arranging distance values. Obviously, learning data having the lowest similarity may also be obtained.

For reference, the deep neural network model may be more robustly trained using the most similar learning data and the most dissimilar learning data as proposed in Thesis 2.

In step S100, the reference data is selected from data having a lower value than a second threshold value in similarity among the learning data 110a based on a similarity metric for features {i.e., the case in which the distance between locations at which reference data is occupied in a feature space is distant}.

As another example, for image data, the reference data may be selected from image data having difference values higher than a predetermined second threshold value in a histogram distribution.

Such reference data serves to guide adaptive pattern transformation, which will be described later, to be accurately performed on the target data 110b. The reference data is not limited to the above-described example and may be composed of images directly selected by a person.

However, in step S100, if similarity between the target data 110b and all reference data is less than the predetermined first threshold value, there is no data to be referenced with respect to the target data 110b. Therefore, this may be classed as impossible to judge and operation may be configured to be ended.

Next, the deep neural network model reproduction performance improvement method according to the present disclosure further includes step S200 in which the adaptive pattern transformation module 330 implemented by the computing apparatus 200 performs adaptive pattern transformation on the target data so that the target data is adapted for the candidate data 110a' or supports the other apparatus to perform the adaptive pattern transformation.

Specifically, in this step S200, the adaptive pattern transformation is performed such that the target data 110b has a qualitative pattern of the learning data 110a using the candidate data 110a', i.e., learning data having a qualitative pattern similar to the target data 110b, and the target data 110b.

Various means for performing such adaptive pattern transformation are known to those skilled in the art. For example, the adaptive pattern transformation may be performed by deep learning based style transfer as disclosed in Thesis 3: "Luan et al. [2017] Fujun Luan, Sylvain Paris, Eli Shechtman, and Kavita Bala. Deep photo style transfer. In 2017 IEEE Conference on Computer Vision and Pattern Recognition (CVPR), volume abs/1703.07511. IEEE, July 2017. doi: 10.1109/cvpr.2017.740." or domain adaptation as disclosed in Thesis 4: "Jun-Yan Zhu*, Taesung Park*, Phillip Isola, and Alexei A. Efros. "Unpaired Image-to-Image Translation using Cycle-Consistent Adversarial Networks", in IEEE International Conference on Computer Vision (ICCV), 2017.". However, the adaptive pattern transformation is not limited to the above-described scheme.

Here, style transfer refers to transferring only a style while maintaining a main format of an image when two pieces of image data are given. This style transfer may be performed by extracting features using an already trained deep neural network and then optimizing the features so that latent features may be similar. In this process, a loss term for local affine transformation is additionally considered so as to maintain content detail of original image data. One means for performing such style transfer is known to those skilled in the art as a cycle-consistent adversarial network (cycle-CAN).

In step S200, if the candidate data is plural (e.g., if reference data having similarity reaching the predetermined first threshold value is plural), a combination or an average value of the candidate data may be reflected in a latent space according to the deep neural network model during qualitative pattern transformation. In other words, a qualitative pattern of the candidate data may be based on a combination or an average value of the candidate data in the latent space. Here, the latent space refers to a multi-dimensional space in which latent parameters or latent features are represented.

If transformation data, which is a result of the adaptive pattern transformation, is generated in step S200, the deep neural network model reproduction performance improvement method according to the present disclosure further includes step S300 in which the computing apparatus 200 transfers the transformation data to the deep neural network model of the deep neural network module 340 or supports the other apparatus to transfer the transformation data to the deep neural network model, thereby acquiring an output value from the deep neural network model.

To meaningfully use this output value, the deep neural network model reproduction performance improvement method according to the present disclosure may further include step S400 in which the output module 350 implemented by the computing apparatus 200 provides information including the output value to an external entity or support the other apparatus to provide the information.

As described with reference to FIGS. 2 to 5 up to now, the present disclosure has an effect of maintaining performance of a deep neural network model trained using a group of data even without inconvenient manual work for quality matching with respect to input data having a different qualitative pattern from the group of data, throughout all embodiments and modified examples of the present disclosure. It will be appreciated that the present disclosure is applicable to data of various formats capable of extracting features and determining similarity.

Those skilled in the art may easily understand that the methods and/or processes and steps thereof described in the above embodiments may be implemented using hardware, software, or a combination of hardware and software suitable for a specific usage. Hardware may include a general-purpose computer and/or an exclusive computing apparatus, a specific computing apparatus, or a special feature or component of the specific computing apparatus. The processes may be implemented using at least one microprocessor, microcontroller, embedded microcontroller, programmable digital signal processor, or programmable device, having an internal and/or external memory. In addition, or, as an alternative, the processes may be implemented using an application specific integrated circuit (ASIC), a programmable gate array, a programmable array logic (PAL), or an arbitrary device configured to process electronic signals, or a combination thereof. Targets of technical solutions of the present disclosure or portions contributing to the prior art may be configured in a form of program instructions performed by various computer components and may be stored in machine-readable recording media. The machine-readable recording media may include, alone or in combination, program instructions, data files, data structures, and the like. The program instructions recorded in the machine-readable recording media may be specially designed and configured for the present disclosure or may be known to those skilled in the art of computer software. Examples of the media may include magnetic media such as hard disks, floppy disks, and magnetic tapes; optical media such as CD-ROM discs, DVDs, and Blu-ray; magneto-optical media such as floptical disks; and hardware devices that are specially configured to store and perform program instructions, such as a ROM, a RAM, a flash memory, and the like. The program instructions may be produced by structural programming languages such as C, object-oriented programming languages such as C++, or high or low-level programming languages (assembly languages, hardware technical languages, database programming languages and techniques), which are capable of being stored, compiled, or interpreted in order to run not only on one of the aforementioned devices but also on a processor, a processor architecture or a heterogeneous combination of different hardware and software combinations, or a machine capable of executing any other program instructions. The examples of the program instructions include machine language code, byte code, and high-level language code executable by a computer using an interpreter etc.

Therefore, according to aspect of the present disclosure, the aforementioned methods and combinations thereof may be implemented by one or more computing apparatuses as executable code that performs the respective steps. According to another aspect, the methods may be implemented by systems that perform the steps and may be distributed over a plurality of devices in various manners or all of the functions may be integrated into a single exclusive, stand-alone device, or different hardware. According to still another aspect, devices that perform steps associated with the aforementioned processes may include the aforementioned hardware and/or software. All of the sequences and combinations associated with the processes are to be included in the scope of the present disclosure.

For example, the described hardware devices may be configured to act as one or more software modules in order to perform the operations of the present disclosure, or vice versa. The hardware devices may include a processor, such as an MPU, a CPU, a GPU, and a TPU, configured to be combined with a memory such as ROM/RAM for storing program instructions and to execute the instructions stored in the memory, and may include a communicator capable of transmitting and receiving a signal to and from an external device. In addition, the hardware devices may include a keyboard, a mouse, and an external input device for receiving instructions created by developers.

While the present disclosure is described with reference to specific matters such as components, some limited embodiments, and drawings, they are merely provided to aid in general understanding of the present disclosure and this disclosure is not limited to the embodiments. It will be apparent to those skilled in the art that various alternations and modifications may be made from the description of the present disclosure.

## Claims

1. A method of improving reproduction performance of an output value for target data having a different qualitative pattern from learning data (110a) related to a deep neural network model by a computing apparatus (200), the method comprising:
receiving the target data (110b), which is images, from a communicator or an external image storage unit;
retrieving at least one candidate data (110a') having a similarity to the target data (110b) that is higher than a first threshold value from reference data;
applying adaptive pattern transformation to the target data (110b) based on a qualitative pattern of the at least one candidate data (110a') to generate transformation data, wherein the adaptive pattern transformation transforms the target data (110b) to have a qualitative pattern corresponding to the qualitative pattern of the at least one candidate data (110a');
transferring the transformation data to the deep neural network model; and
acquiring an output value based on the transformation data from the deep neural network model,
wherein the reference data is data having a similarity of less than a second threshold value among the learning data (110a).

2. The method of claim 1, wherein retrieving the at least one candidate data (110a') comprises:
when the similarity between the target data (110b) and the reference data is less than the first threshold value, terminating the adaptive pattern transformation with classifying the target data (110b) as unconvertible.

3. The method of claim 1, wherein the reference data represents data having a lower similarity related to latent features between the learning data (110a) than the second threshold value, among the learning data (110a).

4. The method of any one of claims 1 to 3, wherein a number of the at least one candidate data (110a') is greater than 2,
wherein the qualitative pattern of the at least one candidate data (110a') is based on a combination of the at least one candidate data (110a') or an average value of the at least one candidate data (110a'), in a latent space of the deep neural network model.

5. A computing apparatus (200) for improving reproduction performance of an output value for target data having a different qualitative pattern from learning data (110a) related to a deep neural network model, the computing apparatus (200) comprising:
a processor configured to perform processes comprising:
receiving the target data (110b), which is images, from a communicator or an external image storage unit;
retrieving at least one candidate data (110a') having a similarity to the target data (110b) that is higher than a first threshold value from reference data;
applying adaptive pattern transformation to the target data (110b) based on a qualitative pattern of the at least one candidate data (110a') to generate transformation data, wherein the adaptive pattern transformation transforms the target data (110b) to have a qualitative pattern corresponding to the qualitative pattern of the at least one candidate data (110a');
transferring the transformation data to the deep neural network model; and
acquiring an output value based on the transformation data from the deep neural network model,
wherein the reference data is data having a similarity of less than a second threshold value among the learning data (110a).

6. The computing apparatus (200) of claim 5, wherein retrieving the at least one candidate data (110a') comprises:
when the similarity between the target data (110b) and the reference data is less than the first threshold value, terminating the adaptive pattern transformation with classifying the target data (110b) as unconvertible.

7. The computing apparatus (200) of claim 5, wherein the reference data represents data having a lower similarity related to latent features between the learning data (110a) than the second threshold value, among the learning data (110a).

8. The computing apparatus (200) of any one of claims 5 to 7, wherein a number of the at least one candidate data (110a') is greater than 2,
wherein the qualitative pattern of the at least one candidate data (110a') is based on a combination of the at least one candidate data (110a') or an average value of the at least one candidate data (110a'), in a latent space of the deep neural network model.

9. A computer program stored in a non-transitory machine-readable recording medium, including instructions that when executed by a computing apparatus (200) cause the computing apparatus (200) to perform the method of any one of claim 1 to claim 4.

## Patentansprüche

1. Verfahren zum Verbessern der Wiedergabeleistung eines Ausgabewerts für Zieldaten, die ein anderes qualitatives Muster als Lerndaten (110a), die sich auf ein tiefes neuronales Netzmodell beziehen, haben, durch eine Computervorrichtung (200), wobei das Verfahren aufweist:
Empfangen der Zieldaten (110b), die Bilder sind, von einer Kommunikationseinrichtung oder einer externen Bildspeichereinheit;
Abrufen von mindestens einem Kandidatendatenelement (110a'), das eine Ähnlichkeit mit den Zieldaten (110b) hat, die höher als ein erster Schwellenwert ist, aus Referenzdaten;
Anwenden einer adaptiven Mustertransformation auf die Zieldaten (110b) auf Grundlage eines qualitativen Musters des mindestens einen Kandidatendatenelements (110a'), um Transformationsdaten zu erzeugen, wobei die adaptive Mustertransformation die Zieldaten (110b) so transformiert, dass sie ein qualitatives Muster haben, das dem qualitativen Muster des mindestens einen Kandidatendatenelements (110a') entspricht;
Übertragen der Transformationsdaten an das tiefe neuronale Netzmodell; und
Erlangen eines Ausgabewerts auf Grundlage der Transformationsdaten aus dem tiefen neuronalen Netzmodell,
wobei die Referenzdaten Daten, die eine Ähnlichkeit von weniger als einem zweiten Schwellenwert haben, von den Lerndaten (110a) sind.

2. Verfahren nach Anspruch 1, wobei das Abrufen des mindestens einen Kandidatendatenelements (110a') aufweist:
wenn die Ähnlichkeit zwischen den Zieldaten (110b) und den Referenzdaten kleiner als der erste Schwellenwert ist, Beenden der adaptiven Mustertransformation mit der Klassifizierung der Zieldaten (110b) als nicht konvertierbar.

3. Verfahren nach Anspruch 1, wobei die Referenzdaten Daten, die eine geringere Ähnlichkeit in Bezug auf latente Merkmale zwischen den Lerndaten (110a) als der zweite Schwellenwert haben, von den Lerndaten (110a) darstellen.

4. Verfahren nach einem der Ansprüche 1 bis 3, wobei eine Anzahl des mindestens einen Kandidatendatenelements (110a') größer als 2 ist,
wobei das qualitative Muster des mindestens einen Kandidatendatenelements (110a') auf einer Kombination des mindestens einen Kandidatendatenelements (110a') oder einem Durchschnittswert des mindestens einen Kandidatendatenelements (110a') in einem latenten Raum des tiefen neuronalen Netzmodells basiert.

5. Computervorrichtung (200) zum Verbessern der Wiedergabeleistung eines Ausgabewerts für Zieldaten, die ein anderes qualitatives Muster als Lerndaten (110a) haben, die sich auf ein tiefes neuronales Netzmodell beziehen, wobei die Computervorrichtung (200) aufweist:
einen Prozessor, der dazu ausgelegt ist, Prozesse auszuführen, die aufweisen:
Empfangen der Zieldaten (110b), die Bilder sind, von einer Kommunikationseinrichtung oder einer externen Bildspeichereinheit;
Abrufen von mindestens einem Kandidatendatenelement (110a'), das eine Ähnlichkeit mit den Zieldaten (110b) hat, die höher als ein erster Schwellenwert ist, aus Referenzdaten;
Anwenden einer adaptiven Mustertransformation auf die Zieldaten (110b) auf Grundlage eines qualitativen Musters des mindestens einen Kandidatendatenelements (110a'), um Transformationsdaten zu erzeugen, wobei die adaptive Mustertransformation die Zieldaten (110b) so transformiert, dass sie ein qualitatives Muster haben, das dem qualitativen Muster des mindestens einen Kandidatendatenelements (110a') entspricht;
Übertragen der Transformationsdaten an das tiefe neuronale Netzmodell; und
Erlangen eines Ausgabewerts auf Grundlage der Transformationsdaten aus dem tiefen neuronalen Netzmodell,
wobei die Referenzdaten Daten, die eine Ähnlichkeit von weniger als einem zweiten Schwellenwert haben, von den Lerndaten (110a) sind.

6. Computervorrichtung (200) nach Anspruch 5, wobei das Abrufen des mindestens einen Kandidatendatenelements (110a') aufweist:
wenn die Ähnlichkeit zwischen den Zieldaten (110b) und den Referenzdaten kleiner als der erste Schwellenwert ist, Beenden der adaptiven Mustertransformation mit der Klassifizierung der Zieldaten (110b) als nicht konvertierbar.

7. Computervorrichtung (200) nach Anspruch 5, wobei die Referenzdaten Daten, die eine geringere Ähnlichkeit in Bezug auf latente Merkmale zwischen den Lerndaten (110a) als der zweite Schwellenwert haben, von den Lerndaten (110a) darstellen,

8. Computervorrichtung (200) nach einem der Ansprüche 5 bis 7, wobei eine Anzahl des mindestens einen Kandidatendatenelements (110a') größer als 2 ist,
wobei das qualitative Muster des mindestens einen Kandidatendatenelements (110a') auf einer Kombination des mindestens einen Kandidatendatenelements (110a') oder einem Durchschnittswert des mindestens einen Kandidatendatenelements (110a') in einem latenten Raum des tiefen neuronalen Netzmodells basiert.

9. Computerprogramm, das in einem nicht flüchtigen maschinenlesbaren Aufzeichnungsmedium gespeichert ist und Anweisungen umfasst, die, wenn sie von einer Computervorrichtung (200) ausgeführt werden, bewirken, dass der Computervorrichtung (200) das Verfahren nach einem der Ansprüche 1 bis 4 ausführt.

## Revendications

1. Une méthode d'amélioration de la performance de reproduction d'une valeur de sortie pour des données cibles ayant un motif qualitatif différent des données d'apprentissage (110a) liées à un modèle de réseau neuronal profond par un appareil informatique (200), la méthode comprenant :
la réception des données cibles (110b), qui sont des images, provenant d'un communicateur ou d'une unité de stockage d'images externe ;
la récupération d'au moins une donnée candidate (110a') ayant une similarité avec les données cibles (110b) supérieure à une première valeur seuil à partir des données de référence ;
l'application d'une transformation adaptative de motif aux données cibles (110b) sur la base d'un motif qualitatif de l'au moins une donnée candidate (110a') pour générer des données de transformation, où la transformation adaptative de motif transforme les données cibles (110b) pour qu'elles aient un motif qualitatif correspondant au motif qualitatif de l'au moins une donnée candidate (110a') ;
le transfert des données de transformation au modèle de réseau neuronal profond ; et
l'acquisition d'une valeur de sortie basée sur les données de transformation à partir du modèle de réseau neuronal profond,
où les données de référence sont des données ayant une similarité inférieure à une seconde valeur seuil parmi les données d'apprentissage (110a).

2. La méthode selon la revendication 1, où la récupération de l'au moins une donnée candidate (110a') comprend :
lorsque la similarité entre les données cibles (110b) et les données de référence est inférieure à la première valeur seuil, la terminaison de la transformation adaptative de motif avec classification des données cibles (110b) comme non convertibles.

3. La méthode selon la revendication 1, où les données de référence représentent des données ayant une similarité inférieure liée à des caractéristiques latentes entre les données d'apprentissage (110a) et la seconde valeur seuil, parmi les données d'apprentissage (110a).

4. La méthode selon l'une quelconque des revendications 1 à 3, où le nombre de l'au moins une donnée candidate (110a') est supérieur à 2,
où le motif qualitatif de l'au moins une donnée candidate (110a') se base sur une combinaison de l'au moins une donnée candidate (110a') ou une valeur moyenne de l'au moins une donnée candidate (110a') dans un espace latent du modèle de réseau neuronal profond.

5. Un appareil informatique (200) pour améliorer la performance de reproduction d'une valeur de sortie pour des données cibles ayant un motif qualitatif différent des données d'apprentissage (110a) liées à un modèle de réseau neuronal profond, l'appareil informatique (200) comprenant :
un processeur configuré pour exécuter des processus comprenant :
la réception des données cibles (110b), qui sont des images, provenant d'un communicateur ou d'une unité de stockage d'images externe ;
la récupération d'au moins une donnée candidate (110a') ayant une similarité avec les données cibles (110b) supérieure à une première valeur seuil à partir des données de référence ;
l'application de la transformation adaptative de motif aux données cibles (110b) sur la base d'un motif qualitatif de l'au moins une donnée candidate (110a') pour générer des données de transformation, où la transformation adaptative de motif transforme les données cibles (110b) pour qu'elles aient un motif qualitatif correspondant au motif qualitatif de l'au moins une donnée candidate (110a');
le transfert des données de transformation au modèle de réseau neuronal profond ; et
l'acquisition d'une valeur de sortie basée sur les données de transformation à partir du modèle de réseau neuronal profond,
où les données de référence sont des données ayant une similarité inférieure à une seconde valeur seuil parmi les données d'apprentissage (110a).

6. L'appareil informatique (200) selon la revendication 5, où la récupération de l'au moins une donnée candidate (110a') comprend :
lorsque la similarité entre les données cibles (110b) et les données de référence est inférieure à la première valeur seuil, la terminaison de la transformation adaptative de motif avec classification des données cibles (110b) comme non convertibles.

7. L'appareil informatique (200) selon la revendication 5, où les données de référence représentent des données ayant une similarité inférieure liée à des caractéristiques latentes entre les données d'apprentissage (110a) et la seconde valeur seuil, parmi les données d'apprentissage (110a).

8. L'appareil informatique (200) selon l'une quelconque des revendications 5 à 7, où le nombre de l'au moins une donnée candidate (110a') est supérieur à 2,
où le motif qualitatif de l'au moins une donnée candidate (110a') se base sur une combinaison de l'au moins une donnée candidate (110a') ou une valeur moyenne de l'au moins une donnée candidate (110a') dans un espace latent du modèle de réseau neuronal profond.

9. Un programme informatique stocké sur un support non transitoire lisible par machine, comprenant des instructions qui, lorsqu'elles sont exécutées par un appareil informatique (200), amènent l'appareil informatique (200) à exécuter la méthode selon l'une quelconque des revendications 1 à 4.
